# EUROPEAN PATENT APPLICATION

(11) **EP 2 703 463 A1**
(43) Date of publication of application: **05.03.2014**
(21) Application number: 13182207.4
(22) Date of filing: 29.08.2013
(51) Int. Cl.: C09J 7/02, C09J 133/08, C09J 133/10, C09J 133/12

(54) **Pressure-sensitive adhesive composition and pressure-sensitive adhesive sheet**

(30) Priority: 29.08.2012 JP 2012189181
(71) Applicant: NITTO DENKO CORPORATION, Ibaraki-shi, Osaka 567-8680 (JP)
(72) Inventor: Tsubaki, Hiroyuki, Ibaraki-shi, Osaka 567-8680 (JP); Kabutoya, Ryuuichi, Ibaraki-shi, Osaka 567-8680 (JP); Inokuchi, Shinji, Ibaraki-shi, Osaka 567-8680 (JP)
(74) Representative: Grünecker, Kinkeldey, Stockmair & Schwanhäusser

(57) **Abstract**

A pressure-sensitive adhesive composition, for producing a pressure-sensitive adhesive layer that forms a pressure-sensitive adhesive sheet according to an embodiment of the present invention, includes a a pressure-sensitive adhesive composite substantially exluding a carboxyl group as a polar group, a bubble, and a surfactant.

## Description

The present invention relates to a pressure-sensitive adhesive composition and a pressure-sensitive adhesive sheet.

Traditionally, pressure-sensitive adhesive sheets including a pressure-sensitive adhesive layer having a bubble structure are known. Such pressure-sensitive adhesive sheets are often used in adhering adherends to curved surfaces or concave-convex surfaces and in applications in which resistance to resilience is said to be necessary. In a pressure-sensitive adhesive layer having a bubble in a publicly-known pressure-sensitive adhesive sheet, an acrylic acid containing, as a polar group, a carboxyl group is used in a pressure-sensitive adhesive composition for forming the pressure-sensitive adhesive layer.

### [Patent Document]

[Patent Document 1] Japanese Patent Application Publication No. 1983-125776

When a carboxyl group is contained in a pressure-sensitive adhesive composition as before, big bubbles having a diameter of more than 500 µm are sometimes generated. As a result, there are problems that: the stability of the quality of a pressure-sensitive adhesive sheet is deteriorated due to the big bubbles; or the appearance of a pressure-sensitive adhesive sheet is impaired with a so-called pinhole being more likely to be generated because the bubbles are continuously located in the thickness direction of the pressure-sensitive adhesive layer, as pressure-sensitive adhesive sheets become thinner and thinner.

The present invention has been made in view of these situations, and a purpose of the invention is to provide a technique in which generation of a big bubble having a diameter of more than 500 µm can be suppressed in a pressure-sensitive adhesive sheet including a pressure-sensitive adhesive layer having a bubble structure.

An aspect of the present invention is a pressure-sensitive adhesive composition. The pressure-sensitive adhesive composition comprises: a pressure-sensitive adhesive composite substantially excluding a carboxyl group as a polar group; a bubble; and a surfactant.

The pressure-sensitive adhesive composition of the aforementioned aspect may comprise an acrylic polymer whose monomer major component is a (meth)acrylic acid ester, as the pressure-sensitive adhesive composite. The pressure-sensitive adhesive composition may comprise a hetero ring-containing vinyl monomer, as the pressure-sensitive adhesive composite. The pressure-sensitive adhesive composition may further comprise a hollow microsphere. The hollow microsphere may be a hollow glass balloon. The pressure-sensitive adhesive composition may be curable by an activated energy beam.

Another aspect of the present invention is a pressure-sensitive adhesive sheet. The pressure-sensitive adhesive sheet includes a pressure-sensitive adhesive layer formed by the pressure-sensitive adhesive composition of any one of the aforementioned aspects.

A pressure-sensitive adhesive sheet in which the respective components described above are appropriately combined can be encompassed within the scope of the invention for which protection is sought by this application.

Embodiments will now be described, by way of example only, with reference to the accompanying drawing which is meant to be exemplary, not limiting, in which:

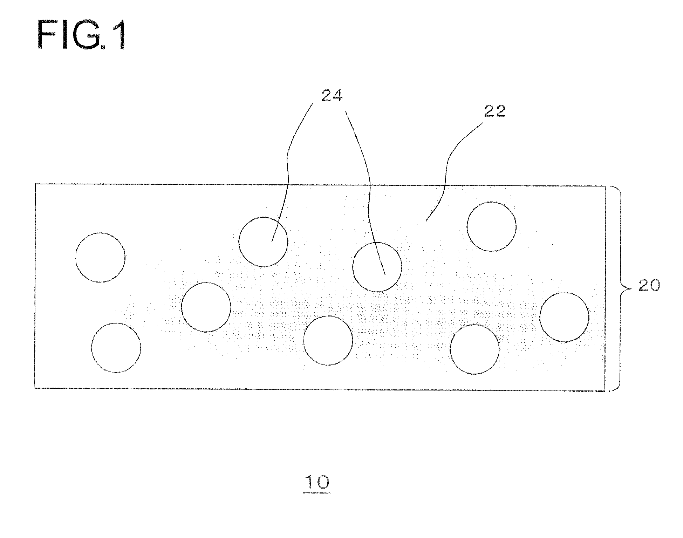

Fig. 1 is a view illustrating part of the section of a pressure-sensitive adhesive sheet according to an embodiment.

The invention will now be described by reference to the preferred embodiments. This does not intend to limit the scope of the present invention, but to exemplify the invention.

Fig. 1 is a view illustrating part of the section of a pressure-sensitive adhesive sheet according to an embodiment. As illustrated therein, a pressure-sensitive adhesive sheet 10 includes an pressure-sensitive adhesive layer 20 as a pressure-sensitive adhesive. The pressure-sensitive adhesive layer 20 is formed by a pressure-sensitive adhesive composition comprising a pressure-sensitive adhesive composite 22, a bubble 24, and a surfactant (not illustrated). In the present specification, the concept of the "pressure-sensitive adhesive sheet 10" can involve objects referred to as a pressure-sensitive adhesive tape, pressure-sensitive adhesive label, and pressure-sensitive adhesive film, etc.

### [Pressure-Sensitive Adhesive Layer]

### (Base Polymer)

The pressure-sensitive adhesive composite 22 comprised in the pressure-sensitive adhesive layer 20 contains a base polymer. The base polymer is not particularly limited, as far as it substantially excludes a carboxyl group as a polar group. Herein, the "substantially excludes a carboxyl group" means that a carboxyl group is contained in an amount of less than 1 mol% based on the base polymer. The base polymer can be appropriately selected from the base polymers (pressure-sensitive adhesive components) in, for example, publicly-known pressure-sensitive adhesives (e.g., an acrylic pressure-sensitive adhesive, rubber pressure-sensitive adhesive, vinyl alkyl ether pressure-sensitive adhesive, silicone pressure-sensitive adhesive, polyester pressure-sensitive adhesive, polyamide pressure-sensitive adhesive, urethane pressure-sensitive adhesive, fluorine pressure-sensitive adhesive, and epoxy pressure-sensitive adhesive, etc.) That is, the pressure-sensitive adhesive composite 22 may be one in which a publicly-known pressure-sensitive adhesive, such as an acrylic pressure-sensitive adhesive, rubber pressure-sensitive adhesive, vinyl alkyl ether pressure-sensitive adhesive, silicone pressure-sensitive adhesive, polyester pressure-sensitive adhesive, polyamide pressure-sensitive adhesive, urethane pressure-sensitive adhesive, fluorine pressure-sensitive adhesive, epoxy pressure-sensitive adhesive, or the like, is used. The content of the base polymer is preferably 60% by mass or more in the pressure-sensitive adhesive composite 22 or the pressure-sensitive adhesive layer 20, more preferably 70% by mass or more, and still more preferably 80% by mass or more.

These base polymers can be used alone or in combination of two or more thereof. As the base polymer, a base polymer in a publicly-known acrylic pressure-sensitive adhesive can be used preferably. The acrylic pressure-sensitive adhesive usually contains, as a base polymer, an acrylic polymer [in particular, an acrylic polymer whose monomer major component is a (meth)acrylic acid ester]. In the acrylic polymer, (meth) acrylic acid esters may be used alone or in combination of two or more thereof. As such a (meth) acrylic acid ester, a (meth) acrylic acid alkyl ester can be used preferably. Examples of the (meth)acrylic acid alkyl ester in the acrylic polymer include, for example: (meth)acrylic acid C1-20 alkyl esters, [preferably (meth)acrylic acid C2-14 alkyl esters, and more preferably (meth)acrylic acid C2-10 alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth)acrylic acid nonadecyl, and (meth)acrylic acid eicosyl.

Examples of the (meth) acrylic acid esters other than the (meth)acrylic acid alkyl esters include, for example:
(meth) acrylic acid esters having an alicyclic hydrocarbon group, such as cyclopentyl(meth)acrylate, cyclohexyl(meth)acrylate, and isobornyl(meth)acrylate; and (meth)acrylic acid esters having an aromatic hydrocarbon group, such as phenyl(meth)acrylate.

Because the (meth)acrylic acid ester is used as a monomer major component of the acrylic polymer, it is important that the content of the (meth)acrylic acid ester [in particular, (meth)acrylic acid alkyl ester] is , for example, 60% by mass or more (preferably 80% by mass or more) based on the total mass of the monomer components for preparing the acrylic polymer.

The acrylic polymer may contain, as a monomer component, various copolymerizable monomers, such as a polar group-containing monomer and polyfunctional monomer. However, even when a carboxyl group-containing monomer, such as a (meth) acrylic acid that contains a carboxyl group, itaconic acid that contains a carboxyl group, maleic acid that contains a carboxyl group, or the like, is used, the polar group-containing monomer being excluded from the polar group-containing monomer, the content of the carboxyl group is 1 mol% or less based on the base polymer, as described above. By using a copolymerizable monomer as a monomer component, for example, the adhesive force to an adherend can be improved, or the cohesive force of the pressure-sensitive adhesive can be enhanced. The polymerization monomers can be used alone or in combination of two or more thereof.

Examples of the polar group-containing monomer, include, for example: hydroxyl group-containing monomers, such as (meth) acrylic acid hydroxyalkyls including (meth) acrylic acid hydroxyethyl, (meth)acrylic acid hydroxypropyl, and (meth)acrylic acid hydroxybutyl, etc.; amido-group containing monomers, such as acrylamide, (meth)acrylamide, N.N-dimethyl(meth)acrylamide, N-methylol(meth)acrylamide, N-methoxymethyl(meth)acrylamide, and N-butoxymethyl(meth)acrylamide; amino group-containing monomers, such as (meth) acrylic acid aminoethyl, (meth)acrylic acid dimethylaminoethyl, and (meth)acrylic acid t-butylaminoethyl; glycidyl group-containing monomers, such as (meth)acrylic acid glycidyl and (meth)acrylic acid methylglycidyl; cyano group-containing monomers, such as acrylonitrile and methacrylonitrile; and hetero ring-containing vinyl monomers, such as N-vinyl-2-pyrrolidone, (meth)acryloyl morpholine, N-vinylpyridine, N-vinylpiperidone, N-vinylpyrimidine, N-vinylpiperazine, N-vinylpyrazine, N-vinylpyrrole, N-vinylimidazole, and N-vinyloxazole. From the viewpoint of improving initial pressure-sensitive adhesive force, a hetero ring-containing vinyl monomer is preferred as the polar group-containing monomer.

The use amount of the polar group-containing monomer is preferably 40% by mass or less (e.g., 1 to 40% by mass), and more preferably 3 to 20% by mass, based on the total mass of the monomer components for preparing the acrylic polymer. If the use amount of the polar group-containing monomer is more than 40% by mass based on the total mass of the monomer components for preparing the acrylic polymer, for example, the cohesive force of an acrylic pressure-sensitive adhesive becomes too large, and there is the fear that the pressure-sensitive adhesiveness may be decreased. If the use amount thereof is too small (e.g., if the use amount is less than 1% by mass based on the total mass of the monomer components for preparing the acrylic polymer), for example, the cohesive force of an acrylic pressure-sensitive adhesive is decreased, and hence high shearing force cannot be obtained.

Examples of the polyfunctional monomer include, for example: hexanediol di(meth)acrylate, (poly)ethylene glycol di (meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butanediol di(meth)acrylate, and hexanediol di(meth)acrylate, etc.

The use amount of the polyfunctional monomer is preferably 2% by mass or less (e.g., 0.01 to 2% by mass), and more preferably 0.02 to 1% by mass, based on the total mass of the monomer components for preparing the acrylic polymer. If the use amount of the polyfunctional monomer is more than 2% by mass based on the total mass of the monomer components for preparing the acrylic polymer, for example, the cohesive force of an acrylic pressure-sensitive adhesive becomes too large, and there is the fear that the pressure-sensitive adhesiveness may be decreased. If the use amount thereof is too small (e.g., if the use amount is less than 0.1% by mass based on the total mass of the monomer components for preparing the acrylic polymer), for example, the cohesive force of an acrylic pressure-sensitive adhesive is decreased.

Examples of the copolymerizable monomers, other than the polar group-containing monomers and the polyfunctional monomers, include, for example: vinyl esters, such as vinyl acetate and vinyl propionate; aromatic vinyl compounds, such as styrene and vinyl toluene; olefins or dienes, such as ethylene, butadiene, isoprene, and isobutylene; vinyl ethers, such as vinyl alkyl ether; vinyl chloride; (meth)acrylic acid alkoxyalkyl monomers, such as (meth)acrylic acid methoxyethyl and (meth)acrylic acid ethoxyethyl; sulfonate group-containing monomers, such as vinyl sulfonate sodium; phosphate group-containing monomers, such as 2-hydroxyethyl acryloyl phosphate; imide group-containing monomers, such as cyclohexyl maleimide and isopropyl maleimide; isocyanate group-containing monomers, such as 2-methacryloyloxyethyl isocyanate; fluorine atom-containing (meth)acrylate; and silicon atom-containing (meth)acrylate, etc.

### (Polymerization Initiator)

In preparing the acrylic polymer as the base polymer, a curing reaction by heat and activated energy beams using a polymerization initiator, such as a thermal polymerization initiator or a photo-polymerization initiator (photoinitiator), can be used. That is, the pressure-sensitive adhesive composite 22 may contain a polymerization initiator, such as a thermal polymerization initiator, photo-polymerization initiator, or the like. Accordingly, the pressure-sensitive adhesive composite 22 can be cured by heat or an energy beam. When a polymerization initiator (thermal polymerization initiator, photo-polymerization initiator, or the like) is contained as described above, curing can be achieved by heat or activated energy beams, and hence the pressure-sensitive adhesive layer 20, having a structure in which bubbles are stably contained, can be easily formed by curing and forming the pressure-sensitive adhesive layer 20 in a state where bubbles are mixed.

As such a polymerization initiator, a photo-polymerization initiator can be preferably used from the advantage that a polymerization time can be shortened, etc. That is, it is preferable to form the pressure-sensitive adhesive layer 20 having a stable bubble structure by using the polymerization with the use of activated energy beams. The photo-polymerization initiators may be used alone or in combination of two or more thereof.

The photo-polymerization initiator is not particularly limited, and, for example, a benzoin ether photo-polymerization initiator, acetophenone photo-polymerization initiator, α-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, or the like can be used.

Specific examples of the benzoin ether photo-polymerization initiator include, for example, benzoin methyl ether, benzoin ethyl ether, benzoin propyl ether, benzoin isopropyl ether, benzoin isobutyl ether, 2,2-dimethoxy-1,2-diphenylethane-1-one, and anisoin methyl ether, etc. Specific examples of the acetophenone photo-polymerization initiator include, for example, 2,2-diethoxyacetophenone, 2,2-dimethoxy-2-phenylacetophenone, 1-hydroxycyclohexyl phenyl ketone, 4-phenoxy dichloroacetophenone, 4-t-butyl-dichloroacetophenone, etc. Specific examples of the α-ketol photo-polymerization initiator include, for example, 2-methyl-2-hydroxy propiophenone and 1-[4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,2-propanedione-2-(O-ethoxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid,
3,3'-dimethyl-4-methoxybenzophenone, polyvinyl benzophenone, and α-hydroxy cyclohexyl phenyl ketone, etc. Specific examples of the ketal photo-polymerization initiator include, for example, benzyl dimethyl ketal, etc. Specific examples of the thioxanthone photo-polymerization initiator include, for example, thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, 2,4-diisopropyl thioxanthone, and dodecyl thioxanthone, etc.

The use amount of the photo-polymerization initiator is not particularly limited, but can be selected from a range of, for example, 0.01 to 5 parts by mass (preferably 0.05 to 3 parts by mass) based on 100 parts by mass of the whole monomer components for forming the base polymer in the pressure-sensitive adhesive composition [in particular, the whole monomer components for forming an acrylic polymer whose monomer major component is a (meth)acrylic acid ester].

In activating the photo-polymerization initiator, it is important to radiate activated energy beams onto the pressure-sensitive adhesive composition. Examples of the activated energy beam include, for example, ionizing radiations, such as an a ray, β ray, γ ray, neutron ray, and electron ray, and an ultraviolet ray, etc. Among them, an ultraviolet ray is particularly preferred. The radiation energy and radiation time of the activated energy beam are not particularly limited, but are only required to activate the photo-polymerization initiator to generate reactions among the monomer components.

Examples of the thermal polymerization initiator include, for example: azo polymerization initiators [e.g.,
2,2'-azobisisobutyronitrile,
2,2'-azobis-2-methylbutyronitrile,
2,2'-azobis(2-methylpropionic acid)dimethyl,
4,4'-azobis-4-cyanovalerianic acid, azobis isovaleronitrile,
2,2'-azobis(2-amidinopropane)dihydrochloride,
2,2'-azobis[2-(5-methyl-2-imidazoline-2-yl)
propane]dihydrochloride,
2,2'-azobis(2-methylpropionamidine)disulfate, and 2,2'-azobis(N,N'-dimethyleneisobutylamidine)dihydrochloride, etc.]; peroxide polymerization initiators (e.g., dibenzoyl peroxide, tert-butyl permaleate, etc.), and redox polymerization initiators, etc. The use amount of the thermal polymerization initiator is not particularly limited, but only has to be within a conventional range in which it can be used as a thermal polymerization initiator.

### (Bubble)

The pressure-sensitive adhesive layer 20 contains the bubbles 24. The amount of the bubbles 24 that can be mixed therein is not particularly limited, but is appropriately selected in accordance with the use application of the sheet, etc. In the present embodiment, it is sufficient that the bubbles 24 are contained in an amount of 5 to 40% by volume, and preferably 8 to 30% by volume, based on the whole volume of the pressure-sensitive adhesive layer 20.

It is desirable that the bubble 24 to be mixed in the pressure-sensitive adhesive layer 20 is basically a bubble of a closed cell type; however, a bubble of a closed cell type and that of an open cell type may coexist.

The bubble 24 usually has a spherical shape (in particular, a true spherical shape), but may have a distorted spherical shape. The average bubble size (diameter) of the bubbles 24 is not particularly limited, but is selected from a range of, for example, 1 to 1000 µm (preferably 10 to 500 µm, and more preferably 30 to 300 µm).

A gas component included in the bubble (a gas component that forms the bubble; sometimes referred to as a "bubble-forming gas") is not particularly limited, but various gas components, such as nitrogen, carbon dioxide, inert gases including argon, etc., and air are used. When a reaction, such as a polymerization reaction, is performed after a bubble-forming gas is mixed with the pressure-sensitive adhesive composite 22, a gas that does not hamper the reaction is preferred as the bubble-forming gas. Nitrogen is preferred as a bubble-forming gas from both the viewpoints of not hampering the reaction and cost.

### (Surfactant)

An example of the surfactant includes a fluorochemical surfactant containing a fluorine polymer having a weight average molecular weight of 20000 or more. The weight average molecular weight of a fluorine polymer that forms the fluorochemical surfactant is not particularly limited as far as it is 20000 or more, but can be selected from a range of, for example, 20000 to 100000 (preferably 22000 to 80000, and more preferably 24000 to 60000). If the weight average molecular weight of the fluorine polymer in the fluorochemical surfactant is less than 20000, the mixability of a bubble or the stability of a mixed bubble is deteriorated, thereby decreasing an amount of bubbles that can be mixed. Further, even if bubbles are mixed, the bubbles are likely to be united with each other during a period of time between when the bubbles are mixed and when the pressure-sensitive adhesive layer 20, containing the bubbles formed by the pressure-sensitive adhesive composition, is formed, thereby causing a pinhole penetrating the pressure-sensitive adhesive layer 20 to be formed.

The fluorine polymers may be used alone or in combination of two or more thereof.

Such a fluorine polymer contains, as a monomer component, at least a monomer having a fluorine atom-containing group (sometimes referred to as a "fluorine monomer"). The fluorine monomers may be used alone or in combination of two or more thereof.

As the fluorine monomer, for example, a vinyl monomer having a fluorine atom-containing group can be used preferably. In such a vinyl monomer having a fluorine atom-containing group, the fluorine atom-containing group is preferably a perfluoro group that may be univalent or polyvalent of divalent or more. As the univalent fluorine atom-containing group (in particular, perfluoro group), for example, perfluoro alkyl groups (e.g., CF₃CF₂ group, CF₃CF₂CF₂ group, etc.) can be used preferably. The perf luoro alkyl group may be bonded to a vinyl monomer via another group (e.g. , -O- group, -OCO- group, alkylene group, or the like) . Specifically, the univalent fluorine atom-containing group may have the form of: a perfluoro ether group (perfluoro alkyl-oxy group, or the like); a perfluoro ester group (perfluoro alkyl-oxycarbonyl group, perfluoro alkyl-carbonyloxy group, or the like); or the like. Examples of the perfluoro ether group include, for example, a CF₃CF₂O group and CF₃CF₂CF₂O group, etc. Examples of the perfluoro ester group include, for example, a CF₃CF₂OCO group, CF₃CF₂CF₂OCO group, CF₃CF₂COO group, and CF₃CF₂CF₂COO group, etc.

With respect to the fluorine atom-containing group of divalent or more, e.g., examples of divalent fluorine atom-containing group include perfluoro alkylene groups (e.g., a tetrafluoroethylene group, hexafluoropropylene group, etc.) corresponding to the perfluoro alkyl groups, etc. Similarly to the perfluoro alkyl group, the perfluoro alkylene group may be bonded to the main chain via another group (e.g. , -O- group, -OCO-group, alkylene group, or the like) . The perfluoro alkylene group may have, for example, the form of: a perfluoro alkylene-oxy group, such as a tetrafluoro ethylene-oxy group, hexafluoro propylene-oxy group, or the like; a perfluoro alkylene-oxycarbonyl group, such as a tetrafluoro ethylene-oxycarbonyl group, hexafluoro propylene-oxycarbonyl group, or the like; or the like.

In fluorine atom-containing groups, such as the perfluoro groups (a perfluoroalkyl group and perfluoro alkylene group, etc.), the number of carbon atoms in the portion of the perfluoro group is not particularly limited, but is, for example, 1 or 2 or more (preferably 3 to 30, and more preferably 4 to 20).

As the vinyl monomer having a fluorine atom-containing group, a (meth)acrylic acid ester having a fluorine atom-containing group is particularly preferred.
As such the (meth)acrylic acid ester having a fluorine atom-containing group, for example, perfluoro alkyl(meth)acrylate is preferred. Examples of the perfluoro alkyl(meth)acrylate includes, for example, perfluoro C1-20 alkyl(meth)acrylates, such as perfluoromethyl(meth)acrylate, perfluoroethyl(meth)acrylate, perfluoropropyl(meth)acrylate, perfluoroisopropyl(meth)acrylate, perfluorobutyl(meth)acrylate, perfluoroisobutyl(meth)acrylate, perfluoro-s-butyl(meth)acrylate, perfluoro-t-butyl(meth)acrylate, perfluoropentyl(meth)acrylate, perfluorohexyl(meth)acrylate, perfluoroheptyl(meth)acrylate, and perfluorooctyl(meth)acrylate, etc.

The fluorine polymer may contain, as monomer components, the fluorine monomer and a monomer component that can be copolymerized with the fluorine monomer (which is sometimes referred to as a "non-fluorine monomer"). The non-fluorine monomers can be used alone or in combination of two or more thereof.

When the fluorine monomer is a vinyl monomer having a fluorine atom-containing group [in particular, it is a (meth) acrylic acid ester having a fluorine atom-containing group], (meth)acrylic acid esters can be preferably used as the non-fluorine monomer. Among them, a (meth)acrylic acid alkyl ester is preferred. Examples of the (meth)acrylic acid alkyl ester include, for example, (meth) acrylic acid C1-20 alkyl esters, [preferably (meth)acrylic acid C4-18 alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth)acrylic acid nonadecyl, and (meth)acrylic acid eicosyl, etc.

Examples of the (meth) acrylic acid esters other than the (meth)acrylic acid alkyl esters include, for example: (meth) acrylic acid esters having an alicyclic hydrocarbon group, such as cyclopentyl(meth)acrylate, cyclohexyl(meth)acrylate, and isobornyl(meth)acrylate; and (meth) acrylic acid esters having an aromatic hydrocarbon group, such as
phenyl(meth)acrylate.

Examples of the non-fluorine monomer include: carboxyl group-containing monomers, such as (meth) acrylic acid, itaconic acid, maleic acid, fumaric acid, crotonic acid, and isocrotonic acid, or anhydrides thereof; sulfonate group-containing monomers, such as vinyl sulfonate sodium; aromatic vinyl compounds, such as styrene and vinyl toluene; cyano group-containing monomers, such as acrylonitrile and methacrylonitrile; olefins or dienes, such as ethylene, butadiene, isoprene, and isobutylene; vinyl esters, such as vinyl acetate; vinyl ethers, such as vinyl alkyl ether; vinyl chloride; amido group-containing monomers, such as acrylamide, methacrylamide, N-vinyl pyrrolidone, N,N-dimethyl(meth)acrylamide, N-methylol(meth)acrylamide, N-methoxymethyl(meth)acrylamide, and N-butoxymethyl(meth)acrylamide; hydroxyl group-containing monomers, such as (meth)acrylic acid hydroxyalkyls including (meth)acrylic acid hydroxyethyl, (meth)acrylic acid hydroxypropyl, and (meth)acrylic acid hydroxybutyl; amino group-containing monomers, such as (meth) acrylic acid aminoethyl, (meth)acrylic acid dimethylaminoethyl, (meth)acrylic acid t-butylaminoethyl, and (meth)acryloyl morpholine; imide group-containing monomers, such as cyclohexyl maleimide and isopropyl maleimide; glycidyl group-containing monomers,such as (meth)acrylic acid glycidyl and (meth)acrylic acid methylglycidyl; and isocyanate group-containing monomers, such as 2-methacryloyloxyethyl isocyanate. Further, a polyfunctional copolymerizable monomer (polyfunctional monomer) may be used as the non-fluorine monomer. Examples of the polyfunctional copolymerizable monomer include, for example: triethylene glycol di(meth)acrylate, diethylene glycol di(meth)acrylate, ethylene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, and divinylbenzene, etc.

In the present embodiment, fluorochemical surfactants containing a fluorine polymer whose monomer component is at least a vinyl monomer having a fluorine atom-containing group [in particular, a (meth) acrylic acid ester having a fluorine atom-containing group] is preferred as the fluorochemical surfactant. Among them, a fluorochemical surfactant, containing a fluorine polymer whose monomer components are at least both a vinyl monomer having a fluorine atom-containing group [in particular, a (meth) acrylic acid ester having a fluorine atom-containing group] and a (meth) acrylic acid ester [in particular, a (meth)acrylic acid alkyl ester], can be used preferably. In the fluorine polymer that forms such a fluorochemical surfactant, the ratio of the vinyl monomer having a fluorine atom-containing group [in particular, a (meth) acrylic acid ester having a fluorine atom-containing group] is not particularly limited, but can be appropriately selected in accordance with the intended properties of the surfactant.

Specifically, as the fluorochemical surfactant, those described below can be used: product name "EFTOP EF-352" (made by Jemco Co., Ltd.) ; product name "EFTOP EF-801" (made by Jemco Co., Ltd.); product name "UNIDYNE TG-656" (made by DAIKIN INDUSTRIES, Ltd.); and product name "F-477" (made by DIC Corporation).

The use amount (solid amount) of the fluorochemical surfactant is not particularly limited, but can be selected from a range of, for example, 0.01 to 2 parts by mass (preferably 0.03 to 1.5 parts by mass, and more preferably 0.05 to 1 parts by mass), based on 100 parts by mass of the whole monomer components for forming the base polymer in the pressure-sensitive adhesive composition [in particular, the whole monomer components for forming the acrylic polymer whose monomer major component is a (meth)acrylic acid ester]. If the use amount of the fluorochemical surfactant is less than 0.01 parts by mass based on 100 parts by mass of the base polymer in the pressure-sensitive adhesive composition, the mixability of a bubble is deteriorated, and hence it becomes difficult to mix a sufficient amount of the bubbles into the pressure-sensitive adhesive composition. On the other hand, if the use amount thereof is more than 2 parts by mass, the adhesiveness is deteriorated.

### (Hollow Microsphere)

The pressure-sensitive adhesive composition according to the present embodiment may further contain a hollow microsphere. By using a hollow microsphere, for example, the shear adhesive force of the pressure-sensitive adhesive composition can be enhanced, and the processability can be improved. The hollow microspheres can be used alone or in combination of two or more thereof.

The diameter (average particle diameter) of the hollow microsphere is not particularly limited, but can be selected from a range of, for example, 1 to 500 µm (preferably 5 to 200 µm, and more preferably 10 to 100 µm).

The hollow microsphere may be a hollow inorganic microsphere or a hollow organic microsphere. With respect to the hollow microsphere, specific examples of the hollow inorganic microsphere include, for example: glass balloons, such as a hollow glass balloon; hollow balloons made of metal compounds, such as a hollow aluminum balloon; and hollow balloons made of porcelain, such as a hollow ceramic balloon. Examples of the organic microsphere include, for example, hollow balloons made of resins, such as a hollow acrylic balloon and a hollow vinylidene chloride balloon.

The specific gravity of the hollow microsphere is not particularly limited, but can be selected from a range of, for example, 0.1 to 0.8 g/cm³ (preferably 0.12 to 0.5 g/cm³). If the specific gravity of a hollow microsphere is smaller than 0.1 g/cm³, lift becomes large when the hollow microspheres are blended and mixed into a pressure-sensitive adhesive composition, and hence it becomes difficult to uniformly disperse the hollow microspheres. On the other hand, if the specific gravity thereof is larger than 0.8 g/cm³, the hollow microsphere becomes expensive, which leads to increased cost.

In addition, various surface treatments (for example, a low surface tension treatment with a silicone compound, fluorine compound, or the like) may be performed on the surface of the hollow microsphere.

The use amount of the hollow microsphere is not particularly limited, but can be selected from a range of, for example, 10 to 50% by volume, and preferably from a range of 15 to 40% by volume, based on the whole volume of the pressure-sensitive adhesive layer 20 formed by the pressure-sensitive adhesive composition. If the use amount of the hollow microsphere is less than 10% by volume based on the whole volume of the pressure-sensitive adhesive layer 20 formed by the pressure-sensitive adhesive composition, an effect of adding the hollow microsphere is small. On the other hand, if the use amount thereof is more than 50% by volume, the adhesive force by the pressure-sensitive adhesive layer 20 is decreased.

### (Other Components)

In the pressure-sensitive adhesive composition according to the present embodiment, appropriate additives may be contained, in addition to the aforementioned components (base polymer, surfactant, bubble, hollow microsphere, polymerization initiator, etc.). The pressure-sensitive adhesive composition may contain appropriate additives, such as, for example, a cross-linking agent (e.g., a polyisocyanate cross-linking agent, silicone cross-linking agent, epoxy cross-linking agent, alkyl-etherified melamine cross-linking agent, or the like), a tackifier (a solid, semi-solid, or liquid tackifier at normal temperature, which is made, for example, of a rosin derivative resin, polyterpene resin, petroleum resin, oil soluble phenolic resin, or the like), a plasticizer, a filler, an anti-aging agent, an antioxidant, a colorant (pigment, dye, or the like), and a surfactant other than those described above. For example, when the pressure-sensitive adhesive layer 20 is formed by using a photo-polymerization initiator, pigments (colored pigments) can be used in an amount by which a photopolymerization reaction is not hampered, in order to color the pressure-sensitive adhesive layer 20. When black is desired as the color of the pressure-sensitive adhesive layer 12, for example, carbon black can be used. From both the viewpoints of degree of coloration and not hampering a photopolymerization reaction, it is desirable that the use amount of the carbon black to be used as a color pigment is selected from a range of, for example, 0.001 to 0.15 parts by mass, and preferably from a range of 0.02 to 0.1 parts by mass, based on 100 parts by mass of the whole monomer components for forming the base polymer in the pressure-sensitive adhesive composition [in particular, the whole monomer components for forming an acrylic polymer whose monomer major component is a (meth)acrylic acid ester].

In the present embodiment, in order that the bubble 24 is stably mixed and present in the pressure-sensitive adhesive composition, it is desirable to blend and mix, as the last component to be blended, the bubble 24 into pressure-sensitive adhesive composition. In particular, it is desirable to enhance the viscosity of the pressure-sensitive adhesive composition at a stage where the bubble is not mixed yet (sometimes referred to as a "precursor of the pressure-sensitive adhesive composition") . The viscosity of the precursor of the pressure-sensitive adhesive composition is not particularly limited as far as the bubble that has been mixed can be stably held, but the viscosity is, for example, 5 to 50 Pa·s, and preferably 10 to 30 Pa·s, as measured by using a BH viscometer as a viscometer and under the conditions of a rotor: No. 5 rotor, the number of rotations: 10 rpm, and measurement temperature: 30°C. If the viscosity (BH viscometer, No. 5 rotor, 10 rpm, 30°C) of the precursor thereof is less than 5 Pa·s, the viscosity is too low, and hence the bubbles that have been mixed are immediately united with each other in some cases, so that the bubbles sometimes come out of the system. On the other hand, if the viscosity is more than 50 Pa·s, the viscosity is too high, and hence it becomes difficult to form the pressure-sensitive adhesive layer 20.

The viscosity of the precursor of the pressure-sensitive adhesive composition can be adjusted, for example, by a method of blending various polymer components, such as acrylic rubber and a thickening additive, or by a method of partially polymerizing the monomer components for forming the base polymer [e.g., monomer components for forming an acrylic polymer, such as a (meth)acrylic acid ester], etc. Specifically, a precursor of the pressure-sensitive adhesive composition having an appropriate viscosity, which can stably contain the bubbles 24, can be prepared, for example: by blending the monomer components for forming the base polymer [e.g., monomer components for forming an acrylic polymer, such as a (meth)acrylic acid ester] with a a polymerization initiator (e.g., a photo-polymerization initiator, or the like) to prepare a monomer mixture; then by performing a polymerization reaction, which is in accordance with the type of the polymerization initiator, on the monomer mixture to prepare a composition (syrup) in which part of the monomer components have been polymerized; and then by blending the aforementioned surfactant and, if necessary, hollow microspheres and various additives into the syrup. The pressure-sensitive adhesive composition stably containing the bubbles 24 can be obtained by introducing and mixing the bubbles 24 into/with the precursor of the pressure-sensitive adhesive composition. Alternatively, in preparing the syrup, the aforementioned surfactant, and the hollow microspheres and various additives that are used if necessary, may be appropriately blended into the monomer mixture in advance.

The method of mixing the bubbles is not particularly limited, but a publicly known bubble mixing method can be used. For example, an example of such an apparatus is provided with: a stator having many fine teeth placed on a disc with a through-hole at its center; and a rotor having teeth as fine as those of the stator, which is placed On the disc to face the stator. A pressure-sensitive adhesive composition, in which a bubble-forming gas is finely dispersed and mixed into a precursor of pressure-sensitive adhesive composition, can be obtained by introducing the precursor thereof between the teeth on the stator and those on the rotor in the apparatus and then by introducing a gas component (bubble-forming gas) for forming bubbles into the precursor thereof via the through-hole while the rotor is being rotated at high speed.

In order to suppress or prevent the bubbles 24 from being united with each other, it is desirable to continuously perform the steps between the mixture of the bubble 24 and the formation of the pressure-sensitive adhesive layer 20 as a series of steps. That is, it is preferable that, after the pressure-sensitive adhesive composition was prepared by mixing the bubbles 24 as stated above, the pressure-sensitive adhesive layer 20 is then formed by using the pressure-sensitive adhesive composition and a publicly known method of forming the layer 20.

Because such a pressure-sensitive adhesive composition stably contains a sufficient amount of the bubbles 24 that are difficult to be united with each other, the pressure-sensitive adhesive composition can be preferably used as the pressure-sensitive adhesive composition containing the bubble 24, used for forming the pressure-sensitive adhesive layer 20 in the pressure-sensitive adhesive sheet 10, by appropriately selecting a base polymer and additives for forming the pressure-sensitive adhesive composition.

The pressure-sensitive adhesive layer 20 formed by the pressure-sensitive adhesive composition can be formed by using the pressure-sensitive adhesive composition and a publicly known method of forming a pressure-sensitive adhesive layer, as stated above. For example, the pressure-sensitive adhesive layer 20 can be formed by applying the pressure-sensitive adhesive composition onto a predetermined surface, and then by drying and curing the applied composition, etc., if necessary. In forming the pressure-sensitive adhesive layer 20, it is preferable to cure the pressure-sensitive adhesive composition by using heat or radiation of activated energy beams, as stated above. That is, the pressure-sensitive adhesive layer 20 can be preferably formed: by applying a pressure-sensitive adhesive composition containing a polymerization initiator, such as a thermal polymerization initiator, photo-polymerization initiator, or the like, onto a predetermined surface; and then by curing, in a state where the bubbles 24 are being stably held, the composition by using heat or radiation of activated energy beams.

The thickness of the pressure-sensitive adhesive layer 20 is not particularly limited, but can be selected from a range of, for example, 200 to 5000 µm, preferably 300 to 4000 µm, and more preferably 400 to 3000 µm. If the thickness of the pressure-sensitive adhesive layer 20 is smaller than 200 µm, cushioning property is decreased, thereby causing the adhesiveness to a curved or concave-convex surface to be deteriorated. On the other hand, if the thickness thereof is larger than 5000 µm, it becomes difficult to obtain a layer having a uniform thickness or the pressure-sensitive adhesive sheet 10.

The pressure-sensitive adhesive layer 20 may have the form of a single layer or multi-layers.

### [Separator]

In the present embodiment, a separator (release liner) may be used in order to protect the adhesive surface (pressure-sensitive adhesive surface) of the pressure-sensitive adhesive layer 20 or of a surface layer when provided. The separator may not be necessarily provided. The separator is released when the adhesive surface protected by the separator is used (i.e., an adherend is attached to the pressure-sensitive adhesive layer 20 or the surface layer protected by the separator).

As such a separator, commonly-used release paper, etc. , can be used. Specifically, for example, a substrate having a release-treated layer, which is treated with a release agent, on at least one surface thereof; a substrate having low adhesiveness made of a fluorine polymer (e.g., polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer, or the like); a substrate having low adhesiveness made of a non-polar polymer (e.g., an olefin resin, such as polyethylene, polypropylene, or the like); or the like can be used. Alternatively, the separator can also be used as a substrate for supporting the pressure-sensitive adhesive layer 20.

As the separator, for example, a separator in which a release-treated layer is formed on at least one surface of a release liner substrate can be used preferably. Examples of such a release liner substrate include: plastic substrate films (synthetic resin films), such as a polyester film (polyethylene terephthalate film, or the like), olefin resin film (polyethylene film, polypropylene film, or the like), polyvinylchloride film, polyimide film, polyamide film (nylon film), and rayon film; paper (high-quality paper, Japanesepaper, craft paper, glassine paper, synthetic paper, and topcoat paper, etc.); and those obtained by multi-layering the above films or paper (composite bodies having 2 to 3 layers) with the use of lamination, co-extrusion, or the like.

On the other hand, the release agent for forming the release-treated layer is not particularly limited, but, for example, a silicone release agent, fluorine release agent, long-chain alkyl release agent, or the like can be used. The release agents can be used alone or in combination of two or more thereof.

The thickness and a manufacturing method of the separator are not particularly limited.

The pressure-sensitive adhesive sheet 10 may be formed in a form of being wound into a rolled shape or formed in a form of being laminated. That is, the pressure-sensitive adhesive sheet 10 according to the present embodiment can have a sheet-shaped form, tape-shaped form, or the like. When the pressure-sensitive adhesive sheet 10 has a form of being wound into a rolled shape, the sheet 10 can be produced, for example, by winding the sheet 10 into a rolled-shape in a state where the pressure-sensitive adhesive layer 20 is being protected by the release-treated layer formed on the rear side of the separator or the substrate.

Because the pressure-sensitive adhesive sheet 10 according to the present embodiment has the pressure-sensitive adhesive layer 20 containing a sufficient amount of the bubbles 24, good adhesiveness can be exerted to a curved or concave-convex surface, and excellent resistance to resilience can be exerted. Accordingly, the pressure-sensitive adhesive sheet 10 can be preferably used as a pressure-sensitive adhesive sheet to be attached to a curved or concave-convex surface, and as a pressure-sensitive adhesive sheet to be used in applications in which resistance to resilience is required.

Further, in the pressure-sensitive adhesive sheet 10, even when the thickness of the pressure-sensitive adhesive layer 20 is small, for example, is less than 1000 µm, it becomes possible to hardly generate a pinhole penetrating the layer 20 in the thickness direction by using, as components of the pressure-sensitive adhesive composition, a pressure-sensitive adhesive composite substantially excluding a carboxyl group as a polar group, a bubble, and a surfactant. Thereby, the pressure-sensitive adhesive sheet 10 of a thin type can be provided without the appearance thereof being impaired.

Although the pressure-sensitive adhesive sheet 10 described above has the pressure-sensitive adhesive layer 20 as a major component, the aspect of the sheet 10 is not limited thereto.

For example, a pressure-sensitive adhesive layer (surface layer) not including a bubble may be laminated on one or both of the major surfaces of the pressure-sensitive adhesive layer 20 (Aspect 1). The surface layer can be formed by using both a publicly known pressure-sensitive adhesive (e.g., an acrylic pressure-sensitive adhesive, rubber pressure-sensitive adhesive, vinyl alkyl ether pressure-sensitive adhesive, silicone pressure-sensitive adhesive, polyester pressure-sensitive adhesive, polyamide pressure-sensitive adhesive, urethane pressure-sensitive adhesive, fluorine pressure-sensitive adhesive, epoxy pressure-sensitive adhesive, or the like) and a publicly known method of forming a pressure-sensitive adhesive layer. The thickness of the surface layer is not particularly limited, but can be appropriately selected in accordance with the purpose and application of the pressure-sensitive adhesive sheet.

Alternatively, the pressure-sensitive adhesive sheet may have a structure in which the pressure-sensitive adhesive layer 20 is laminated on one or both of the major surfaces of the substrate (Aspect 2). In this case, an appropriate thin body can be used as the substrate. Examples of the thin body include, for example: a paper substrate, such as paper; a fiber substrate, such as cloth, non-woven cloth, net, or the like; a metal substrate, such as a metal foil, metal plate, or the like; a plastic substrate, such as a plastic film or sheet; a rubber substrate, such as a rubber sheet; a foam, such as a foam sheet; or a laminated body of these substrates (in particular, a laminated body of a plastic substrate and another substrate, that of both plastic films (or sheets), or the like) . Examples of the material of such a plastic film or sheet include, for example: olefin resins whose monomer component is an α-olefin, such as polyethylene (PE), polypropylene (PP), ethylene-propylene copolymer, and ethylene-vinylacetate copolymer (EVA); polyester resins, such as polyethylene terephthalate (PET), polyethylenenaphthalate (PEN), and polybutylene terephthalate (PBT); polyvinyl chloride (PVC); vinyl acetate resin; polyphenylene sulfides (PPS); amide resins, such as polyamide (nylon), wholly aromatic polyamide (aramid) ; polyimide resin; and polyether ether ketone (PEEK) etc. These materials can be used alone or in combination of two or more thereof.

When a plastic substrate is used as the substrate, a deformation property, such as a coefficient of extension, may be controlled by extension processing, etc. When the pressure-sensitive adhesive layer 20 is formed by being cured with the use of activated energy beams, it is preferable to use a substrate that does not hamper the transmission of the activated energy beams as the substrate.

The thickness of the substrate can be appropriately selected in accordance with the strength, flexibility, and purpose of use, etc. The thickness is, for example, generally 1000 µm, for example, 1 to 1000 µm, preferably approximately 1 to 500 µm, and more preferably approximately 3 to 300 µm, but is not particularly limited thereto. The substrate may have a single layer form or a laminated form.

Alternatively, the substrate may have a structure in which the aforementioned Aspect 1 and Aspect 2 are appropriately combined together.

According to the pressure-sensitive adhesive sheet 10 having the pressure-sensitive adhesive layer described above, the generation of a bubble having a diameter of more than 500 µm can be suppressed and the stability of the quality can be improved by using a pressure-sensitive adhesive composite substantially excluding a carboxyl group as a polar group. Further, when the pressure-sensitive adhesive sheet 10 is made thin, the generation of a pinhole, which can be generated with bubbles being continuously located in the thickness direction of the pressure-sensitive adhesive layer, can be suppressed and the appearance of the pressure-sensitive adhesive sheet 10 can be suppressed from being impaired.

### Examples

Hereinafter, the present invention will be described in more detail based on Examples, but the invention should not be limited at all by these Examples.

The components and contents of the pressure-sensitive adhesive composition used for the production of each of Examples 1 and 2 and Comparative Example 1 are shown in Table 1.

### (Example 1)

After 0.05 parts by mass of "IRGACURE 651" (product name, made by BASF) and 0.05 parts by mass of "IRGACURE 184" (product name, made by BASF), as photo-polymerization initiators, were blended and mixed into 100 parts by mass of 2-ethylhexyl acrylate (2EHA) as a monomer component, the mixture was irradiated with ultraviolet (UV) rays before the viscosity thereof (BH viscometer, No. 5 rotor, 10 rpm, measurement temperature: 30°C) became approximately 9.0 Pa·s to produce a composition (syrup) in which part of the monomer component was polymerized. Thereafter, 1.00 part by mass (converted into solid content) of a fluorochemical surfactant (F-477 made by DIC Corporation) as a surfactant and 0.10 parts by mass of NK-Ester A-HD-N (made by SHIN-NAKAMURA CHEMICAL Co., Ltd.) as a cross-linking agent were added to the partially polymerized monomer syrup to produce a precursor of a pressure-sensitive adhesive composition (sometimes referred to as a "precursor A of a pressure-sensitive adhesive composition").

After the precursor A of a pressure-sensitive adhesive composition was put into a beaker, bubbles were mixed into the precursor A by using a homomixer so as to bite the bubbles while bubbling and introducing a nitrogen gas from the bottom, thereby obtaining a pressure-sensitive adhesive composition that contained bubbles (sometimes referred to as a "pressure-sensitive adhesive composition A").

After the pressure-sensitive adhesive composition A was applied on a surface of a substrate made of polyethylene terephthalate, the surface having been subjected to a release treatment, so that the thickness of the composition A was 0.8 mm after being dried and cured, a surface of a substrate made of polyethylene terephthalate, the surface having been subjected to a release treatment, was attached onto the surface of the composition A. The attached object was irradiated with UV rays having an illuminance of approximately 4.0 mW/cm² for 10 minutes to be cured, so that a pressure-sensitive adhesive sheet having a pressure-sensitive adhesive layer formed by the pressure-sensitive adhesive composition A was produced. In the obtained pressure-sensitive adhesive sheet, a carboxyl group was contained in an amount of less than 1 mol% based on the base polymer.

### (Example 2)

A precursor of a pressure-sensitive adhesive composition (sometimes referred to as a "precursor B of a pressure-sensitive adhesive composition") was produced in the same way as in Example 1, except that 91.5 parts by mass of 2-ethylhexyl acrylate (2EHA), 7 parts by mass of N-vinyl-2-pyrrolidone (NVP), and 1.5 parts by mass of N-(2-hydroxyethyl)acrylamide (HEAA) were used as monomer components. After the monomer components and the photo-polymerization initiators were mixed together, the mixture was irradiated with UV rays before the viscosity thereof (BH viscometer, No. 5 rotor, 10 rpm, measurement temperature: 30°C) became approximately 9.8 Pa·s to produce a composition in which part of the monomer components were polymerized.

A pressure-sensitive adhesive composition (sometimes referred to as a "pressure-sensitive adhesive composition B") was obtained in the same way as in Example 1, except that the precursor B of a pressure-sensitive adhesive composition was used. Further, a pressure-sensitive adhesive sheet was produced in the same way as in Example 1, except that the pressure-sensitive adhesive composition B was used. In the obtained pressure-sensitive adhesive sheet, a carboxyl group was contained in an amount of less than 1 mol% based on the base polymer.

### (Comparative Example 1)

A precursor of a pressure-sensitive adhesive composition (sometimes referred to as a "precursor C of a pressure-sensitive adhesive composition") was produced in the same way as in Example 1, except that a monomer mixture, in which 90 parts by mass of 2-ethylhexyl acrylate (2EHA) and 20 parts by mass of an acrylic acid were mixed together as monomer components, was used. After the monomer components and the photo-polymerization initiators were mixed together, the mixture was irradiated with UV rays before the viscosity thereof (BH viscometer, No. 5 rotor, 10 rpm, measurement temperature: 30°C) became approximately 11.4 Pa·s to produce a composition in which part of the monomer components were polymerized.

A pressure-sensitive adhesive composition (sometimes referred to as a "pressure-sensitive adhesive composition C" ) was obtained in the same way as in Example 1, except that the precursor C of a pressure-sensitive adhesive composition was used. Further, a pressure-sensitive adhesive sheet was produced in the same way as in Example 1, except that the pressure-sensitive adhesive composition C was used. In the obtained pressure-sensitive adhesive sheet, a carboxyl group was contained in an amount of less than 1 mol% based on the base polymer.

**[Table 1]**

| | ACRYLIC POLYMER [PARTS BY MASS] | | | | GROSS-LINKING AGENT [ARTS BY MASS] | SURFACTANT | |
|---|---|---|---|---|---|---|---|
| | 2EHA | AA | NVP | HEAA | | TYPE | [PARTS BY MASS] |
| EXAMPLE 1 | 100 | - | - | - | 0.10 | F477 | 1.00 |
| EXAMPLE 2 | 91.5 | - | 7 | 1.5 | 0.10 | F477 | 1.00 |
| COMPARATIVE EXAMPLE 1 | 90 | 10 | - | - | 0.10 | F477 | 1.00 |

### (Evaluation of Presence/Absence of Bubble Having Diameter of 500 µm or More)

In each of the pressure-sensitive adhesive sheets of Examples 1 and 2 and Comparative Example 1, a situation of whether a bubble having a diameter of 500 µm or more was generated was evaluated by the following method. A specimen was produced by cutting the pressure sensitive adhesive sheet of each of Examples 1 and 2 and Comparative Example 1 into a size of 100 mm in width x 100 mm in length. The state of a bubble was confirmed by visually observing the specimen from the surface thereof or by using a digital microscope . The specimen was determined to be "x" when a bubble having a diameter of 500 µm or more was present, and determined to be "°" when such a bubble was absent. (Herein, the "diameter" means the maximum length between both the ends of a bubble when the bubble did not have a spherical shape.) The results are shown in Table 2.

**[Table 2]**

| | PRESENCE/ABSENCE OF BUBBLE HAVING DIAMETER OF 500 µm OR MORE |
|---|---|
| EXAMPLE 1 | ○ |
| EXAMPLE 2 | ○ |
| COMPARATIVE EXAMPLE 1 | x |

### (Pressure-sensitive Adhesive Force Test)

After the substrate attached to one surface of the pressure-sensitive adhesive sheet of each of Examples 1 and 2 and Comparative Example 1, the pressure-sensitive adhesive sheet of each of them was backed up by attaching a polyethylene terephthalate (PET) film having a thickness of 25 µm to the one surface. A specimen was produced by cutting the backed up pressure-sensitive adhesive sheet into a size of 25 mm in width x 100 mm in length. After the substrate attached to the other surface of the specimen was peeled off, the specimen was attached toaSUS304BAplate, as an adherend, and both were pressure-bonded together by reciprocating a 2-kg roller. After the pressure-bonding, the test specimen was left uncontrolled, for 20 minutes, under a measurement environment in which temperature was 23°C and relative humidity was 50%, and then pressure-sensitive adhesive force (N/25mm) was measured by using a tensile tester (apparatus name "Autograph", made by Shimadzu Corporation) and in conditions in which a tensile speed of 300 mm/min and a tensile angle of 180°, according to JIS Z 0237 (2005) . The results are shown in Table 3.

**[Table 3]**

| | PRESSURE-SENSITIVE ADHESIVE FORCE [N/25 mm] |
|---|---|
| EXAMPLE 1 | 3.0 |
| EXAMPLE 2 | 20.4 |
| COMPARATIVE EXAMPLE 1 | 23.4 |

As shown in Table 3, it has been confirmed that the pressure-sensitive adhesive sheet of Example 2 has initial pressure-sensitive adhesive force similar to that of Comparative Example 1.

The embodiments described above will be summarized below.
(Item 1) A pressure-sensitive adhesive composition comprising: a pressure-sensitive adhesive composite substantially excluding a carboxyl group as a polar group; a bubble; and a surfactant.
(Item 2) The pressure-sensitive adhesive composition according to Item 1 comprising an acrylic polymer whose monomer major component is a (meth)acrylic acid ester, as the pressure-sensitive adhesive composite.
(Item 3) The pressure-sensitive adhesive composition according to Item 1 or Item 2 comprising a hetero ring-containing vinyl monomer, as the pressure-sensitive adhesive composite.
(Item 4) The pressure-sensitive adhesive composition according to any one of Items 1 to 3 further comprising a hollow microsphere.
(Item 5) The pressure-sensitive adhesive composition according to Item 4, in which the hollow microsphere is a hollow glass balloon.
(Item 6) The pressure-sensitive adhesive composition according to any one of Items 1 to 5 that is curable by an activated energy beam.
(Item 7) A pressure-sensitive adhesive sheet having a pressure-sensitive adhesive layer formed by the pressure-sensitive adhesive composition according to any one of Items 1 to 6.

## Claims

1. A pressure-sensitive adhesive composition comprising:
a pressure-sensitive adhesive composite substantially excluding a carboxyl group as a polar group;
a bubble; and
a surfactant.

2. The pressure-sensitive adhesive composition according to claim 1 comprising an acrylic polymer whose monomer major component is a (meth)acrylic acid ester, as the pressure-sensitive adhesive composite.

3. The pressure-sensitive adhesive composition according to claim 1 or claim2 comprising a hetero ring-containing vinyl monomer, as the pressure-sensitive adhesive composite.

4. The pressure-sensitive adhesive composition according to any one of claims 1-3 further comprising a hollow microsphere.

5. The pressure-sensitive adhesive composition according to claim 4, wherein
the hollow microsphere is a hollow glass balloon.

6. The pressure-sensitive adhesive composition according to any one of claims 1-5 that is curable by an activated energy beam.

7. A pressure-sensitive adhesive sheet having a pressure-sensitive adhesive layer formed by the pressure-sensitive adhesive composition according to any one of claims 1-6.
